# EUROPÄISCHE PATENTANMELDUNG

(11) **EP 4 653 966 A1**
(43) Veröffentlichungstag der Anmeldung: **26.11.2025**
(21) Anmeldenummer: 24177017.1
(22) Anmeldetag: 21.05.2024
(51) Int. Cl.: G05B 23/02

(54) **VERFAHREN ZUM ERZEUGEN EINES FEHLERREPRÄSENTIERENDEN SIGNALS FRS FÜR EINE INDUSTRIEANLAGE**

(71) Anmelder: Siemens Aktiengesellschaft, 80333 München (DE)
(72) Erfinder: Hsiao, I, 81673 München (DE); Ingenhoff, Kathrin, 85579 Neubiberg (DE); Jahn, Matthias, 90592 Schwarzenbruck (DE); Klos, Hans-Henning, 91249 Weigendorf (DE); Kress, Peter, 90518 Altdorf b. Nürnberg (DE); Schlör, Tim, 80799 München (DE); Schweizer, Steffen, 75031 Eppingen (DE); Waltinger, Ulli, 86633 Neuburg (DE)
(74) Vertreter: Siemens Patent Attorneys

(57) **Zusammenfassung**

Die Erfindung betrifft das Erzeugen eines fehlerrepräsentierenden Signals FRS für eine Industrieanlage (100), anhand dessen im Fehlerfall einer Komponente der Anlage zum einen automatisiert eine aussagekräftige Information über den Fehlerfall zur Verfügung gestellt ist und zum anderen auf den Fehlerfall bezogene Maßnahmen einleitbar sind. Das fehlerrepräsentierende Signal FRS wird automatisiert anhand von textlichen Inhalten von betriebszustandsabhängigen Meldungen der fehlerhaften Komponente sowie anhand einer zeitlichen Reihenfolge dieser Meldungen generiert, indem aus diesen Informationen zunächst ein Merkmalsvektor FV erzeugt wird, der mit Hilfe eines entsprechend trainierten Netzwerkes weiter verarbeitet wird.

## Beschreibung

Die Erfindung betrifft das Erzeugen eines fehlerrepräsentierenden Signals FRS für eine Industrieanlage, anhand dessen im Fehlerfall zum einen automatisiert eine aussagekräftige Information über den Fehlerfall zur Verfügung gestellt ist und zum anderen auf den Fehlerfall bezogene Maßnahmen einleitbar sind.

In diversen Industrieanlagen, bspw. an Produktionslinien zur Produktion eines Produkts, kommt es regelmäßig zu Fehlerfällen wie bspw. Fehlfunktionen oder Komplettausfällen, bspw. in Form von Maschinenstillständen etc. Im Fehlerfall ist es zum einen wünschenswert, die Industrieanlage schnellstmöglich wieder in den Normalbetrieb zurückzuversetzen, um bspw. Produktionsausfälle oder das Auftreten fehlerhafter Produkte zu unterbinden. Zum anderen ist eine klare, eindeutige Dokumentation des Fehlerfalls von Interesse, um dahingehend aus dem bereits aufgetretenen Fehlerfall zu lernen, dass zukünftig beim erneuten Auftreten desselben Fehlerfalls sehr gezielt reagiert werden kann und des Weiteren beim Aufbau und Betrieb vergleichbarer Industrieanlagen diese Fehlerfälle gänzlich unterbunden und/oder ggf. ebenfalls gezielte Reaktionen möglich sind - sei es jeweils durch das die Industrieanlage bedienende Personal oder aber in automatischer Art und Weise.

Eine fachgerechte Dokumentation von Fehlerfällen, wenn es überhaupt zu einer solchen kommt, wird häufig durch das bedienende Personal erstellt. Kommt es zu einem Stillstand der Anlage, so nutzt das Personal zur Bestimmung der ursächlichen Ausfallklasse sowohl Erkenntnisse, die es während der Reparatur der stillstehenden Komponente oder Produktionslinie der Anlage sammelt oder bereits gesammelt hat, als auch Informationen, die an einer Anzeigeeinrichtung, bspw. ein HMI-Bedienfeld, der Linie gezeigt werden. Dies können bspw. Störungsmeldungen sein, die im SPS-Programm ("speicherprogrammierbare Steuerung" SPS) der Linie auf der Basis von SPS-Inputdaten gebildet werden. Bspw. in einem Bedienfeld der Produktionslinie gibt das Personal alle bekannten relevanten Daten zu dem Fehlerfall ein, also bspw. den Ort und die Art des Fehlers, und schließt die Dokumentation ab. Diese Dokumentation wird häufig nur für einen Teil der Fehlerfälle durchgeführt, die bspw. eine Mindest-Stillstandszeit überschreiten, damit der Aufwand der Dokumentation in Relation zum Fehler bzw. dessen Beseitigung ausgewogen bleibt.

Ein vergleichsweise hoher Aufwand wird demnach in eine Dokumentation von Fehlern nach deren Behebung investiert, um darauf aufbauend Verbesserungsprozesse zielgerichtet durchführen zu können, obwohl viele Fehlermuster technisch beobachtbar sind und sich auf ähnliche Art und Weise wiederholen. Kurze, häufige Fehler werden häufig gar nicht dokumentiert und können daher im Verbesserungsprozess nicht zielgerichtet betrachtet und nicht abgestellt werden.

Es ist daher eine Aufgabe der vorliegenden Erfindung, einen Ansatz aufzuzeigen, in einer Industrieanlage auftretende Fehlerfälle zu analysieren, so dass daraus unmittelbar Konsequenzen oder Maßnahmen abgeleitet werden können. Diese Aufgabe wird durch das in Anspruch 1 beschriebene Verfahren und die in Anspruch 15 erläuterte Vorrichtung gelöst. Unteransprüche beschreiben vorteilhafte Ausgestaltungen.

Beim hier vorgeschlagenen computerimplementierten Verfahren wird ein fehlerrepräsentierendes Signals FRS erzeugt, welches einen Fehlerfall einer Komponente k, bspw. eine Maschine, ein Roboter etc., eines Anlagenteils einer Industrieanlage repräsentiert. Die Komponente k umfasst eine oder mehrere Funktionseinheiten FG(f,k) mit f=1,...,F(k), wobei eine jede Funktionseinheit FG(f,k) im Betrieb der Industrieanlage und der Komponente k über eine Zeit t eine Vielzahl von betriebszustandsabhängigen Meldungen MESS(f,k,t) generiert. Im Fehlerfall wird in einem ersten Schritt unter Berücksichtigung von textlichen Inhalten zumindest einiger MESSrel(f,k,t) der Meldungen MESS(f,k,t) und unter Berücksichtigung der zeitlichen Reihenfolge dieser Meldungen MESSrel(f,k,t) ein Merkmalsvektor oder auch "Feature Vector" FV generiert. In einem zweiten Schritt wird der Merkmalsvektor FV einem vorab trainierten künstlichen neuronalen Netzwerk KNN2 zugeführt, welches daraus das fehlerrepräsentierende Signal FRS bestimmt und ausgibt.

Der Ausdruck "Fehlerfall" einer Komponente k meint dabei, dass für zumindest eine der Funktionseinheiten FG(f,k) der betroffenen Komponente k ein Fehlerfall vorliegt, bspw. eine Fehlfunktion oder ein Ausfall.

Zur Generierung des Merkmalsvektors FV können aus der Gesamtheit der Meldungen MESS(f,k,t) im ersten Schritt zunächst diejenigen Meldungen MESSrel(f,k,t) ausgewählt werden, die für den Fehlerfall relevant sind. Die ausgewählten relevanten Meldungen MESSrel(f,k,t) können dann im zweiten Schritt mit einem vorab trainierten künstlichen neuronalen Netzwerkes KNN1 zu dem Merkmalsvektor FV des Fehlerfalls transformiert werden.

Dabei können Meldungen MESS(f,k,t) dann für den Fehlerfall als relevant angesehen werden, wenn sie zum einen von derjenigen Komponente k, insbesondere von derjenigen Funktionseinheit FG(f,k) dieser Komponente k, generiert wurden, für die der Fehlerfall vorliegt, und wenn sie zum anderen in einem vorgegebenen Zeitfenster TREL generiert wurden, welches sich über einen Zeitraum zwischen Zeitpunkten T0 und T1 mit T0<TF<T1 erstreckt, wobei TF den Zeitpunkt des Fehlerfalls repräsentiert. Hierbei kann bspw. ΔT0=TF-T0=10min und ΔT1=T1-TF=1min gelten oder allgemeiner ΔT0>ΔT1. Mit der eingeschränkten Auswahl ist die anfallende und auszuwertende Datenmenge reduziert, so dass Aufwände sowohl für eventuelle Datenspeicherung als auch für die Berechnung der im Weiteren benötigten Größen reduziert sind. Desweiteren erlaubt die Auswahl des Zeitfensters und damit der Daten bzw. Meldungen mit besonderem Bezug auf den Fehlerfall eine Bestimmung des Fehlerfalls mit höherer Verlässlichkeit.

Eine jeweilige Meldung MESS(f,k,t) kann als Informationen bspw. einen betriebszustandsabhängigen Meldungstext TXT(f,k,t), welcher einen momentanen Betriebszustand der Funktionseinheit FG(f,k) zur Zeit t beschreibt, einen Zeitstempel TS(f,k,t), welcher den Zeitpunkt repräsentiert, zu dem die jeweilige Meldung MESS(f,k,t) generiert wurde, sowie eine Kennung ID(f,k), anhand derer die Funktionseinheit FG(f,k) eindeutig identifizierbar ist, umfassen. Optional kann eine solche Meldung auch zumindest einen übergeordneten Meldungstypen MT(f,k,t) umfassen, welcher eine von mehreren vorgegebenen Kategorien repräsentiert, der die Meldung MESS(f,k,t) zugeordnet ist.

Die relevanten Meldungen MESSrel(f,k,t) können zu dem Merkmalsvektor FV transformiert werden, indem zunächst einer jeden ausgewählten relevanten Meldung MESSrel(f,k,t) entsprechend der von der Meldung umfassten Informationen TXT, TS, ID und ggf. MT für einen jeden Parameter PARA(p) einer vorgegebenen Gruppe GRP_PARA von diskreten Parametern PARA(p) ein Parameterwert VAL_PARA(p) zugewiesen wird. Einer bestimmten Meldung MESSrel(f',k',t') werden bspw. der Parameterwert MC(2) für den Parameter "Meldungscluster" MC und der Parameterwert dT(3) für den Parameter "Zeitintervall" dT zugeordnet, was bedeutet, dass diese Meldung MESSrel(f',t') dem Meldungscluster MC(2) zugehörig ist und zu einer Zeit t' generiert wurde, die im Zeitintervall dT(3) liegt. Für jede mögliche Kombination KOM von Parameterwerten verschiedener Parameter kann dann eine Anzahl Z(KOM) ermittelt werden, die repräsentiert, wie vielen der ausgewählten relevanten Meldungen MESSrel(f,k,t) die jeweilige Kombination KOM von Parameterwerten zugewiesen ist. Die Gesamtheit der Anzahlen Z(KOM) bildet einen Wertevektor Z(KOM), aus dem dann der Merkmalsvektor FV ermittelt werden kann.

Der Begriff "diskret" soll hier und in der gesamten Anmeldung ausdrücken, dass der jeweilige diskrete Parameter eben nicht kontinuierlicher Natur ist, sondern dass nur eine endliche Mange von Parameterwerten zur Verfügung steht, die zudem typischerweise auch noch "vorgegeben" ist.

Einer der diskreten Parameter PARA(p1)=MC der vorgegebenen Gruppe GRP_PARA kann verschiedene Meldungscluster MC repräsentieren, wobei für den Parameter PARA(p1)=MC eine Anzahl MCN von Parameterwerten VAL_PARA(p1)=MC(1),...,MC(MCN) vorgegeben ist, wobei verschiedene Parameterwerte MC(i), MC(j) mit i≠j des Parameters MC verschiedene Cluster von Meldungen repräsentieren, bspw. MC(1)="... ", MC(2)="... ". Einer jeden relevanten Meldung MESSrel(f,k,t) kann basierend auf ihrem Meldungstext TXT(f,k,t) zumindest einer der verfügbaren Parameterwerte MC(1),...,MC(MCN) zugeordnet werden.

Ein anderer der diskreten Parameter PARA(p2)=dT der Gruppe GRP_PARA kann verschiedene Zeitintervalle dT repräsentieren, wobei für den Parameter PARA(p2)=dT eine Anzahl DTN von Parameterwerten VAL_PARA(p2)=dT(1),...,dT(DTN) vorgegeben ist, wobei verschiedene Parameterwerte dT(i), dT(j) mit i≠j des Parameters dT verschiedene Zeitintervalle repräsentieren. Diese können derart gewählt sein, dass ihre Summe dem vorgegebenen Zeitfenster TREL entspricht, d.h. das Zeitfenster bzw. der Zeitraum TREL ist in die Vielzahl von Zeitintervallen dT(i), unterteilt, wobei die Zeitintervalle direkt aneinander anschließen und nicht überlappen. Einer jeden relevanten Meldung MESSrel(f,k,t) kann basierend auf ihrem Zeitstempel TS(f,k,t) einer der verfügbaren Parameterwerte dT(1),...,dT(DTN) zugeordnet werden.

Ein anderer der diskreten Parameter PARA(p3)=MT der vorgegebenen Gruppe GRP_PARA kann verschiedene Meldungstypen MT repräsentieren, wobei für den Parameter PARA(p3)=MT eine Anzahl MTN von Parameterwerten VAL_PARA(p3)=MT(1),...,MT(MTN) vorgegeben ist, wobei verschiedene Parameterwerte MT(i), MT(j) mit i≠j des Parameters MT verschiedene Typen von Meldungen repräsentieren, bspw. MT(1)="... ", MT(2)="...". Einer jeden relevanten Meldung MESSrel(f,k,t) kann basierend auf ihrem Meldungstypen MT(f,k,t) und/oder basierend auf ihrem Meldungstext TXT(f,k,t) zumindest einer der verfügbaren Meldungstypen MT(1),...,MT(MTN) zugeordnet werden.

Ein anderer der diskreten Parameter PARA(p4)=FET der vorgegebenen Gruppe GRP_PARA kann verschiedene Funktionseinheitentypen FET repräsentieren, wobei für den Parameter PARA(p4)=FET eine Anzahl FEN von Parameterwerten VAL_PARA(p4)=FET(1),...,FET(FEN) vorgegeben ist, wobei verschiedene Parameterwerte FET(i), FET(j) mit i≠j des Parameters MT verschiedene Typen von Meldungen repräsentieren, bspw. FET(1)="...", FET(2)="...". Einer jeden relevanten Meldung MESSrel(f,k,t) kann basierend auf ihrer Kennung ID(f,k) zumindest einer der verfügbaren Funktionseinheitentypen FET(1),...,FET(FEN) zugeordnet werden.

In einer konkreteren Formulierung können die ausgewählten relevanten Meldungen MESSrel(f,k,t) zu dem Merkmalsvektor FV transformiert werden, indem zunächst einer jeden der ausgewählten relevanten Meldungen MESSrel(f,k,t) in Abhängigkeit von ihrem Meldungstext TXT(f,k,t) ein bestimmtes, passendes Meldungscluster MC(i') aus einer diskreten Vielzahl MCN von vorgegebenen Meldungsclustern MC(i) mit i=1,...,MCN zugewiesen wird und anschließend zur Bildung eines Wertevektors Z eine Vielzahl MCN von Anzahlen Z(i) mit i=1,...,MCN ermittelt wird, wobei eine jeweilige Anzahl Z(i') repräsentiert, wie vielen relevanten Meldungen MESSrel(f,k,t) das bestimmte Meldungscluster MC(i') zugeordnet ist. Die Gesamtheit der Vielzahl MCN von Anzahlen Z(i) bildet den Wertevektor Z(i). Aus der Gesamtheit der Anzahlen Z bzw. aus diesem Wertevektor Z, d.h. in dieser ersten Ausführungsform Z=Z(i) für alle i, kann der Merkmalsvektor FV bestimmt werden. Dabei können mögliche Parameterwerte MC(i) des verschiedene Meldungscluster MC(i) repräsentierenden Parameters MC mit Hilfe eines K-Means Algorithmus identifiziert werden, indem zunächst sämtliche mögliche Meldungen MESS(f,k,t) der Anlage insbesondere mit einem TF-IDF Verfahren in eine numerische Matrix umgewandelt werden und die Matrix anschließend als Input für den K-Means Algorithmus verwendet wird, um die Parameterwerte MC(i) zu erzeugen.

Zusätzlich kann einer jeden der ausgewählten relevanten Meldungen MESSrel(f,k,t) in Abhängigkeit von ihrem Zeitstempel TS(f,k,t) ein bestimmtes, passendes Zeitintervall dT(d`) aus einer diskreten Vielzahl DTN von vorgegebenen Zeitintervallen dT(d) mit d=1,..,dTD zugewiesen werden. Zur Bildung des Wertevektors Z kann eine Vielzahl MCN*DTN von Anzahlen Z(i,d) mit i=1,...,MCN und d=1,...,DTN ermittelt werden, wobei eine jeweilige Anzahl Z(i`,d`) repräsentiert, wie vielen relevanten Meldungen MESSrel(f,k,t) das bestimmte Meldungscluster MC(i') sowie das bestimmte Zeitintervall dT(d`), d.h. die Kombination KOM der Parameterwerte MC(i') und dT(d`), zugeordnet ist. Die Gesamtheit der Vielzahl MCN*DTN von Anzahlen Z(i,d) bildet den Wertevektor Z(i,d). Aus der Gesamtheit der Anzahlen Z, d.h. in dieser zweiten Ausführungsform Z=Z(i,d) für alle i und alle d, bzw. aus diesem Wertevektor Z kann der Merkmalsvektor FV bestimmt werden.

Zusätzlich kann einer jeden der ausgewählten relevanten Meldungen MESSrel(f,k,t) in Abhängigkeit von ihrem Meldungstypen MT(f,k,t) ein bestimmter, passender Meldungstyp MT(y`) aus einer diskreten Vielzahl MTN von vorgegebenen Meldungstypen MT(y) mit y=1,...,MTN zugewiesen werden. Zur Bildung des Wertevektors Z kann eine Vielzahl MCN*DTN*MTN von Anzahlen Z(i,d,y) mit i=1,...,MCN, d=1,...,DTN und y=1,...,MTN ermittelt werden, wobei eine jeweilige bestimmte Anzahl Z(i',d',y') repräsentiert, wie vielen Meldungen MESSrel(f,t) das bestimmte Meldungscluster MC(i') sowie das bestimmte Zeitintervall dT(d`) sowie der bestimmte Meldungstyp MT(y'), d.h. die Kombination KOM der Parameterwerte MC(i'), dT(d`) und MT(y'), zugeordnet ist. Die Gesamtheit der Vielzahl MCN*DTN*MTN von Anzahlen Z(i,d,y) bildet den Wertevektor Z(i,d,y). Aus der Gesamtheit der Anzahlen Z, d.h. in dieser dritten Ausführungsform Z=Z(i,d,y) für alle i und alle d und alle y, bzw. aus diesem Wertevektor Z kann der Merkmalsvektor FV bestimmt werden.

Zusätzlich kann einer jeden der ausgewählten relevanten Meldungen MESSrel(f,k,t) in Abhängigkeit von der dort enthaltenen Kennung ID(f,k) ein bestimmter, passender Funktionseinheitentyp FET(q') aus einer diskreten Vielzahl FEN von vorgegebenen Funktionseinheitentypen FET(q) mit q=1,...,FEN zugewiesen werden. Zur Bildung des Wertevektors Z kann eine Vielzahl MCN*DTN*MTN*FEN von Anzahlen Z(i,d,y,q) ermittelt werden, wobei eine jeweilige bestimmte Anzahl Z(i',d',y',q') repräsentiert, wie vielen Meldungen MESSrel(f,k,t) das bestimmte Meldungscluster MC(i') sowie das bestimmte Zeitintervall dT(d`) sowie der bestimmte Meldungstyp MT(y`) sowie der bestimmte Funktionseinheitentyp FET(q'), d.h. die Kombination KOM der Parameterwerte MC(i'), dT(d`), MT(y`) und FET(q'), zugeordnet ist. Die Gesamtheit der Vielzahl MCN*DTN*MTN von Anzahlen Z(i,d,y,q) bildet den Wertevektor Z(i,d,y,q). Aus der Gesamtheit der Anzahlen Z, d.h. in dieser vierten Ausführungsform Z=Z(i,d,y,q) für alle i und alle d und alle y und alle q, bzw. aus diesem Wertevektor Z kann der Merkmalsvektor FV bestimmt werden.

Der so gebildete Merkmalsvektor FV kann dem künstlichen neuronalen Netzwerk KNN2 zugeführt werden, welches daraufhin, insbesondere unter Verwendung eines Gradient Boosting Modells, zum einen für eine jede Fehlerklasse FK(c) aus einer Vielzahl FKN von vorgegebenen Fehlerklassen FK(c) mit c=1,...,ERR die Wahrscheinlichkeit P(FK(c)) ermittelt, dass der vom Merkmalsvektor FV repräsentierte Fehlerfall der jeweiligen Fehlerklasse FK(c) entspricht, und zum anderen in Abhängigkeit von den Wahrscheinlichkeiten P(FK(c)) das fehlerrepräsentierende Signal FRS bereitstellt, welches die Fehlerklasse FK(c') des Fehlerfalls repräsentiert.

Dabei kann das fehlerrepräsentierende Signal FRS für den Fall, dass die Wahrscheinlichkeit P(FK(c')) für eine bestimmte Fehlerklasse FK(c') größer ist als ein erster Schwellwert SW1, insbesondere SW1 ≥ 90%, diese bestimmte Fehlerklasse FK(c') repräsentieren. Ansonsten kann das fehlerrepräsentierende Signal FRS für den Fall, dass die Summe der N größten Wahrscheinlichkeiten P(FK(c)) größer als ein zweiter Schwellwert SW2 ist, insbesondere SW2 ≥ 37%, diese N Fehlerklassen repräsentiert, wobei N vorgebbar ist, vorzugsweise N=3. Ansonsten kann das fehlerrepräsentierende Signal FRS so gewählt sein, dass es gar keine Fehlerklasse repräsentiert.

Das so gebildete fehlerrepräsentierende Signal FRS kann schließlich an einer Anzeigeeinrichtung angezeigt werden. Zusätzlich oder alternativ kann in Abhängigkeit vom fehlerrepräsentierenden Signal FRS ein Signalgeber ein akustisches und/oder optisches Warnsignal erzeugen. Ebenfalls zusätzlich oder alternativ kann in Abhängigkeit vom fehlerrepräsentierenden Signal FRS zumindest die Komponente k, insbesondere die Funktionseinheit FG(f,k), für die der Fehlerfall festgestellt wurde, gesteuert oder geregelt werden. Das Vorliegen des fehlerrepräsentierenden Signals FRS bewirkt also unmittelbar eine Vielzahl von unterschiedlichen Maßnahmen, angefangen von einer einfachen Anzeige, aufgrund derer ein Bedienpersonal in die Lage versetzt wird, weitere Schritte zur Fehlerbehebung einzuleiten. In einer Ausführungsform erfolgt ein vom Signal FRS selbst abhängiges Eingreifen in den von der Anlage ausgeführten Prozess. Wenn also bspw. als Fehlerklasse eine kritische Fehlfunktion einer Komponente festgestellt wird, kann das Signal FRS derart ausgebildet sein, dass es eine Abschaltung der Komponente, des entsprechenden Anlagenteils oder sogar der Industrieanlage bewirkt. Sinn und Zweck des Signals FRS ist hier also ein schnellstmögliches und vom jeweiligen Fehlerfall maximal abhängiges Reagieren auf diesen Fehlerfall.

Ein Anlagenteil einer Industrieanlage, welches eine Vielzahl von Komponenten k umfasst, die ihrerseits jeweils zumindest eine Funktionseinheit FK(f,k) aufweisen, ist mit einer Kontrolleinheit ausgestattet, die eingerichtet ist, das oben erläuterte Verfahren auszuführen.

Die Lösung der Aufgabe baut darauf auf, dass im Betrieb der Industrieanlage die Komponenten in Form von Meldungen diverse Informationen über ihren Betriebszustand liefern. Im Fehlerfall werden diese Meldungen analysiert und daraus ein Signal FRS abgeleitet, welches den Fehlerfall charakterisiert und anhand dessen Maßnahmen getroffen werden können.

Weitere Vorteile und Ausführungsformen ergeben sich aus den Zeichnungen und der entsprechenden Beschreibung.

Im Folgenden werden die Erfindung und beispielhafte Ausführungsformen anhand von Zeichnungen näher erläutert. Dort werden gleiche Komponenten in verschiedenen Figuren durch gleiche Bezugszeichen gekennzeichnet. Es ist daher möglich, dass sich bei der Beschreibung einer zweiten Figur zu einem bestimmten Bezugszeichen, welches bereits im Zusammenhang mit einer anderen, ersten Figur erläutert wurde, keine näheren Erläuterungen finden. In einem solchen Fall kann bei der Ausführungsform der zweiten Figur davon ausgegangen werden, dass die dort mit diesem Bezugszeichen gekennzeichnete Komponente auch ohne nähere Erläuterung im Zusammenhang mit der zweiten Figur die gleichen Eigenschaften und Funktionalitäten aufweist, wie im Zusammenhang mit der ersten Figur erläutert. Desweiteren werden der Übersichtlichkeit wegen teilweise nicht sämtliche Bezugszeichen in sämtlichen Figuren dargestellt, sondern nur diejenigen, auf die in der Beschreibung der jeweiligen Figur Bezug genommen wird.

Es zeigen:
- FIG 1: eine Industrieanlage,

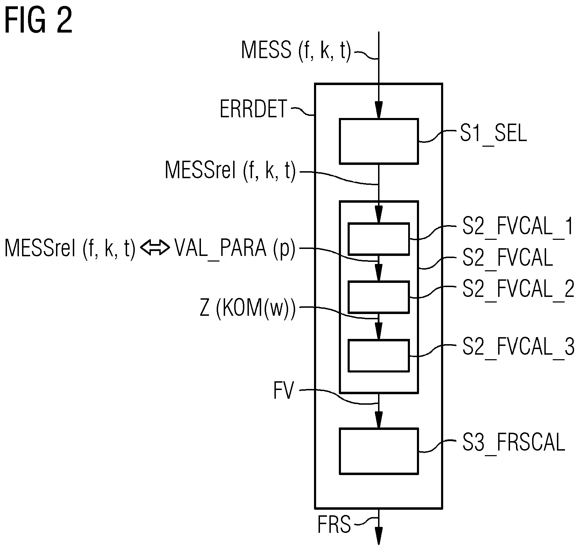

- FIG 2: eine schematische Ansicht des erfindungsgemäßen Verfahrens.

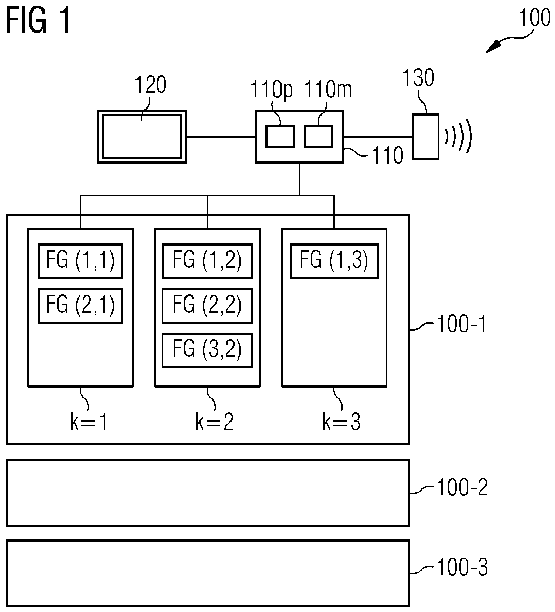

Die FIG 1 zeigt eine Industrieanlage 100, bspw. eine Anlage 100 zur Produktion eines Produktes, mit einer Vielzahl K, bspw. K=3, von Komponenten k=1,...,K, welche benötigt werden, um den Zweck der Industrieanlage 100 zu erfüllen, bspw. um ein bestimmtes Produkt herzustellen. Die Komponenten k können bspw. Maschinen, Roboter oder sonstige Gerätschaften etc. der Anlage 100 sein. Eine jede Komponente k umfasst ihrerseits je nach Aufgabe der jeweiligen Komponente k in der Anlage 100 eine Anzahl F(k) von Funktionseinheiten FG(f,k) mit f=1,...,F(k). Im einfachsten Fall, in dem eine bestimmte Komponente k' nur eine Funktionseinheit FG(1,k') umfasst, d.h. F(k')=1, kann diese Komponente k' selbst diese Funktionseinheit sein, d.h. k`=FG(1,k`). Im gezeigten Beispiel der FIG 1 gilt rein exemplarisch F(k=1)=2, F(k=2)=3, F(k=3)=1. Eine reale Industrieanlage wird typischerweise wesentlich umfangreicher sein. Eine Funktionseinheit FG(f,k) kann bspw. dadurch definiert sein, dass sie das kleinste Bauteil einer Komponente k ist, für das ein Fehlerfall festgestellt und gemeldet werden kann.

Die Anlage 100 kann in verschiedene Anlagenteile bzw. Sektionen oder auch "Linien" 100-a mit a=1,...,A unterteilt sein, wobei A die Anzahl der Anlagenteile angibt. Rein exemplarisch zeigt FIG 1 eine Industrieanlage mit A=3, wobei für die Anlagenteile 100-2 und 100-3 auf die Darstellung der Komponenten und Funktionseinheiten verzichtet wurde. In der Realität würden auch diese Anlagenteile 100-2, 100-3 typischerweise über eine Vielzahl von Komponenten und Funktionseinheiten verfügen. Der Begriff "Anlagenteil" 100-a kann im einen Extrem die gesamte Industrieanlage 100, ggf. umfassend eine Vielzahl von Komponenten k bzw. Maschinen, meinen, so dass A=1 gilt. Im anderen Extrem kann ein Anlagenteil 100-a eine einzelne Komponente k bzw. Maschine der Industrieanlage 100 meinen, so dass A letztlich die Anzahl der betrachteten Maschinen der Industrieanlage 100 angibt. Eine gangbare Definition des Umfangs eines "Anlagenteils" hängt bspw. von der Struktur, Größe, Funktionsweise etc. der Industrieanlage 100 ab. Bspw. kann ein Anlagenteil 100-a eine von mehreren Produktionslinien der Industrieanlage 100 sein und demzufolge diejenigen Maschinen umfassen, die miteinander über einen gemeinsamen in der jeweiligen Produktionslinie 100-a ausgeführten Prozess verbunden sind, bspw. den Prozess der Produktion eines bestimmten Bauteils des Produktes. Wenn das Produkt bspw. eine Vielzahl B von separat herzustellenden Bauteilen umfasst und die Industrieanlage 100 sowohl zur Herstellung der einzelnen Bauteile als auch zur Montage der Bauteile zum endgültigen Produkt vorgesehen ist, kann sowohl zur Herstellung eines jeden Bauteils als auch für die Endmontage jeweils ein separater Anlagenteil 100-a vorgesehen sein. In diesem einfachen Fall würde also für die Anzahl A der Anlagenteile A=B+1 gelten. Weitere Kriterien zur Unterscheidung verschiedener Anlagenteile 100-a können auch Materialflüsse in der Industrieanlage 100 und/oder eine Netzwerk-Topologie der Industrieanlage 100 sein. Letzteres meint den Fall, bei dem die Industrieanlage 100 eine Anzahl von Steuerungen, bspw. PLCs, aufweist, von denen eine jede eine oder mehrere Komponenten k der Industrieanlage 100 steuert. In diesem Fall kann ein Anlagenteil 100-a bspw. diejenigen Komponenten k umfassen, die von ein und derselben Steuerung gesteuert werden.

Die Industrieanlage 100 weist zudem eine Kontrolleinheit 110 mit einem oder mehreren Prozessoren 110p und einem oder mehreren Speichern 110m auf, die eingerichtet ist, die Komponenten k der Industrieanlage 100 bzw. der Anlagenteile 100-a zu überwachen und dahingehend zu steuern und/oder zu regeln, dass am Ende das Produkt fehlerfrei hergestellt wird. Hierzu ist die Kontrolleinheit 110 auch mit den einzelnen Funktionseinheiten FG(f,k) verbunden, um diese zu steuern und/oder zu regeln. Grundsätzlich kann vorgesehen sein, für jedes Anlagenteil eine separate Kontrolleinheit vorzusehen. Dies wird hier aber nicht dargestellt.

Die Kontrolleinheit 110 ist des Weiteren eingerichtet, die Industrieanlage hinsichtlich des Vorliegens eines Fehlerfalls einer Komponente k zu überwachen. Dabei meint der Ausdruck "Fehlerfall einer Komponente k", dass bspw. für zumindest eine der Funktionseinheiten FG(f,k) der betroffenen Komponente k ein Fehlerfall vorliegt, bspw. eine Fehlfunktion oder ein Ausfall. In einem solchen Fall wird durch die betroffene Komponente k' und/oder Funktionseinheit FG(f',k') ein Signal ERR erzeugt, welches zumindest Informationen über die vom Fehlerfall betroffene Komponente k' und/oder Funktionseinheit FG(f',k') sowie über den Zeitpunkt TF des Fehlerfalls beinhaltet. Es kann davon ausgegangen werden, dass das Signal ERR ein übliches Standard-Signal ist. Das Signal ERR wird zwar wie im Folgenden erläutert verwendet, dieser Aspekt ist jedoch nicht selbst der Gegenstand der vorliegenden Erfindung, sondern kann wie im einschlägigen Stand der Technik üblich erfolgen. Die Kontrolleinheit 110 ist nun erfindungsgemäß so eingerichtet, dass sie für den Fall, dass ein solcher Fehlerfall und somit das Signal ERR auftritt, ein Verfahren ERRDET zur Erzeugung eines fehlerrepräsentierenden Signals FRS auszuführen, welches den jeweiligen Fehlerfall der Komponente k repräsentiert.

Um das fehlerrepräsentierende Signal FRS zu erzeugen, führt die Kontrolleinheit 110 das Verfahren ERRDET aus. Im Rahmen des Verfahrens ERRDET empfängt und verarbeitet die Kontrolleinheit 110 von den Funktionseinheiten FG(f,k) grundsätzlich im Betrieb der Industrieanlage 100 und der Komponente k über eine Zeit t generierte Meldungen MESS(f,k,t), welche vom jeweiligen momentanen Betriebszustand der Funktionseinheit FG(f,k) abhängen. Dementsprechend ist eine jede Funktionseinheit FG(f,k) eingerichtet, im Betrieb der Industrieanlage 100 und der Komponente k über die Zeit t eine derartige Vielzahl von betriebszustandsabhängigen Meldungen MESS(f,k,t) zu generieren, d.h. die Meldungen MESS(f,k,t) hängen vom momentanen Betriebszustand der Funktionseinheit FG(f,k) ab. Betriebszustände können bspw. sein "Normal", "Stand-by", "Fehler", "Alarm", "Aus" etc.

Eine jeweilige Meldung MESS(f,k,t) umfasst als Informationen zumindest einen betriebszustandsabhängigen Meldungstext TXT(f,k,t), welcher einen momentanen Betriebszustand der Funktionseinheit FG(f,k) zur Zeit t beschreibt, sowie einen Zeitstempel TS(f,k,t), welcher den Zeitpunkt repräsentiert, zu dem die jeweilige Meldung MESS(f,k,t) generiert wurde. Zusätzlich kann eine Meldung MESS(f,k,t) eine Kennung ID(f,k) umfassen, anhand derer die die Meldung MESS(f,k,t) generierende Funktionseinheit FG(f,k) eindeutig identifizierbar ist, und/oder zumindest einen übergeordneten Meldungstypen MT(f,k,t), welcher eine von mehreren vorgegebenen Kategorien repräsentiert, der die Meldung MESS(f,k,t) zuzuordnen ist.

Meldungstexte TXT(f,k,t) können bspw. Informationen zu spezifischen Prozessschritten der jeweiligen Funktionseinheit FG(f,k) enthalten, bspw. Schweißen, Kleben, Fügen, etc. Generell hängen die insgesamt zur Verfügung stehenden Meldungstexte TXT(f,k,t) einer Funktionseinheit FG(f,k,t,) vom Funktionseinheitentyp der Funktionseinheit ab. Beispiele für Meldungstexte sind "Schweißsteuerung Qualitäts Stop" und "Clinchen Prozessfehler".

Typische Meldungstypen MT(f,k,t) sind bspw. "Störung" und "Warnung".

In einem ersten Schritt S1_SEL des Verfahrens ERRDET zur Erzeugung des fehlerrepräsentierenden Signals FRS werden im Fehlerfall, der von der Kontrolleinheit 110 anhand des Signals ERR aus der Industrieanlage 100 festgestellt wird, aus der Gesamtheit aller Meldungen MESS(f,k,t), welche bspw. im Speicher 110m der Kontrolleinheit 110 zwischengespeichert sind, diejenigen Meldungen MESSrel(f,k,t) ausgewählt, die für den Fehlerfall relevant sind. Dabei sind Meldungen MESS(f,k,t) dann für den Fehlerfall relevant, wenn sie zum einen von derjenigen Komponente k, insbesondere von derjenigen Funktionseinheit FG(f,k) dieser Komponente k, generiert wurden, für die der Fehlerfall vorliegt, und wenn sie zum anderen in einem vorgegebenen Zeitfenster TREL generiert wurden, welches sich über einen Zeitraum zwischen Zeitpunkten T0 und T1 mit T0<TF<T1 erstreckt, wobei TF den Zeitpunkt des Fehlerfalls repräsentiert. Hierbei kann bspw. ΔT0=TF-T0=10min und ΔT1=T1-TF=1min gelten oder allgemeiner ΔT0>ΔT1. Es werden also nur Meldungen MESSrel(f,k,t) ausgewertet, die in einem relativ engen Zeitfenster TREL=T1-T0 um den Zeitpunkt TF des Fehlerfalls herum generiert wurden. Damit ist die anfallende und auszuwertende Datenmenge reduziert, so dass Aufwände sowohl für eventuelle Datenspeicherung als auch für die Berechnung der im Weiteren benötigten Größen reduziert sind. Desweiteren erlaubt die Auswahl des Zeitfensters und damit der Daten bzw. Meldungen mit besonderem Bezug auf den Fehlerfall eine Bestimmung des Fehlerfalls mit höherer Verlässlichkeit.

In einem zweiten Schritt S2_FVCAL des Verfahrens ERRDET werden in drei aufeinander folgenden Teilschritten S2_FVCAL_1, S2_FVCAL_2, S2_FVCAL_3 die ausgewählten relevanten Meldungen MESSrel(f,k,t,) zu einem Merkmalsvektor oder auch "feature vector" FV transformiert.

Hierzu wird zunächst im ersten Teilschritt S2_FVCAL_1 des zweiten Schritts S2_FVCAL einer jeden ausgewählten relevanten Meldung MESSrel(f,k,t) entsprechend den von der Meldung umfassten Informationen für einen jeden Parameter PARA(p) einer vorgegebenen Gruppe GRP_PARA von diskreten Parametern PARA(p) ein Parameterwert VAL_PARA(p) zugewiesen. Der Begriff "diskret" soll hier und in der gesamten Anmeldung ausdrücken, dass der jeweilige diskrete Parameter PARA bzw. dessen mögliche Parameterwerte VAL_PARA eben nicht kontinuierlicher Natur ist, sondern dass nur eine endliche Mange von Parameterwerten zur Verfügung steht, die zudem typischerweise auch noch "vorgegeben" ist.

Einer der diskreten Parameter PARA(p1)=MC der vorgegebenen Gruppe GRP_PARA repräsentiert verschiedene Meldungscluster MC, wobei für den Parameter PARA(p1)=MC eine Anzahl MCN von Parameterwerten VAL_PARA(p1)=MC(1),...,MC(MCN) vorgegeben ist. Verschiedene Parameterwerte MC(i), MC(j) mit i≠j des Parameters MC repräsentieren verschiedene Cluster von Meldungen, bspw. MC(1)="Technik", MC(2)="Qualität", MC(3)="Organisation". Im ersten Teilschritt S2_FVCAL_1 wird einer jeden relevanten Meldung MESSrel(f,k,t) basierend auf ihrem Meldungstext TXT(f,k,t) zumindest einer der verfügbaren Parameterwerte MC(1), MC(2),... zugeordnet.

Ein zusätzlicher diskreter Parameter PARA(p2)=dT der Gruppe GRP_PARA repräsentiert verschiedene Zeitintervalle dT, wobei für diesen Parameter PARA(p2)=dT eine Anzahl DTN von Parameterwerten VAL_PARA(p2)=dT(1),...,dT(DTN) vorgegeben ist. Diese sind idealerweise derart gewählt, dass ihre Summe dem vorgegebenen Zeitfenster TREL entspricht, d.h. das Zeitfenster bzw. der Zeitraum TREL ist in die Vielzahl von Zeitintervallen dT unterteilt, wobei die Zeitintervalle direkt aneinander anschließen und nicht überlappen. Verschiedene Parameterwerte dT(i), dT(j) mit i≠j des Parameters dT repräsentieren verschiedene Zeitintervalle. Im ersten Teilschritt S2_FVCAL_1 wird einer jeden relevanten Meldung MESSrel(f,k,t) basierend auf ihrem Zeitstempel TS(f,k,t) einer der verfügbaren Parameterwerte dT(1), dT(2),... zugeordnet. Im oben genannten Beispiel, bei dem das Zeitfenster TREL mit ΔT0=10min und ΔT1=1min gewählt war, können die Zeitintervalle dT(i) bspw. so gewählt sein, dass DTN=4 gilt. Dabei erstrecken sich bspw. dT(1) über einen Zeitraum zwischen 10 Minuten vor TF bis 2 Minuten vor TF, dT(2) über einen Zeitraum zwischen 2 Minuten vor TF und 30 Sekunden vor TF, dT(3) über einen Zeitraum zwischen 30 Sekunden vor TF und 5 Sekunden vor TF und dT(4) über einen Zeitraum zwischen 5 Sekunden vor TF und 1 Minute nach TF.

Einer bestimmten Meldung MESSrel(f',k',t') werden also bspw. der Parameterwert MC(2) für den Parameter "Meldungscluster" MC und der Parameterwert dT(3) für den Parameter "Zeitintervall" dT zugeordnet, was bedeutet, dass diese Meldung MESSrel(f',k',t') dem Meldungscluster MC(2) zugehörig ist und zu einer Zeit t' generiert wurde, die im Zeitintervall dT(3) liegt. Kurz gesagt ist dieser Meldung MESSrel(f',k',t') konsequenterweise die Kombination [MC(2); dT(3)] von Parameterwerten zugeordnet.

Zusätzlich, jedoch optional, kann ein anderer der diskreten Parameter PARA(p3)=MT der vorgegebenen Gruppe GRP_PARA verschiedene Meldungstypen MT repräsentieren, wobei dann für den Parameter PARA(p3)=MT eine Anzahl MTN von Parameterwerten VAL_PARA(p3)=MT(1),...,MT(MTN) vorgegeben ist. Verschiedene Parameterwerte MT(i), MT(j) mit i≠j des Parameters MT repräsentieren verschiedene Typen von Meldungen, bspw. MT(1)="Störung", MT(2)="Warnung". Im ersten Teilschritt S2_FVCAL_1 kann, optional, einer jeden relevanten Meldung MESSrel(f,k,t) basierend auf ihrem Meldungstypen MT(f,k,t) und/oder basierend auf ihrem Meldungstext TXT(f,k,t) zumindest einer der verfügbaren Meldungstypen MT(1), MT(2),... zugeordnet werden.

Zusätzlich, jedoch ebenfalls optional, kann ein anderer der diskreten Parameter PARA(p4)=FET der vorgegebenen Gruppe GRP_PARA verschiedene Funktionseinheitentypen FET repräsentieren, wobei für den Parameter PARA(p4)=FET eine Anzahl FEN von Parameterwerten VAL_PARA(p4)=FET(1),...,FET(FEN) vorgegeben ist. Verschiedene Parameterwerte FET(i), FET(j) mit i≠j des Parameters FET repräsentieren verschiedene Typen von Funktionsgruppen, bspw. FET(1)="Motor", FET(2)="Sensor". Im ersten Teilschritt S2_FVCAL_1 kann, optional, einer jeden relevanten Meldung MESSrel(f,k,t) bspw. basierend auf ihrer Kennung ID(f,k) zumindest einer der verfügbaren Funktionseinheitentypen FET(1), FET(2),... zugeordnet werden.

Angenommen, dass die beiden optionalen Parameter MT, FET verwendet werden sollen, und des Weiteren angenommen, dass die oben genannte Meldung MESSrel(f',k',t') dem Meldungstypen MT(1) und dem Funktionseinheitentypen FET(4) zugeordnet ist, ist dieser Meldung MESSrel(f',k',t') konsequenterweise die Kombination [MC(2); dT(3); MT(1); FET(4)] von Parameterwerten zugeordnet.

Das Ergebnis des ersten Teilschritts S2_FVCAL_1 des zweiten Schritts S2_FVCAL ist demnach eine gegenseitige Zuordnung MESSrel(f,k,t)⇔VAL_PARA(p) von Parameterwerten VAL_PARA(p) zu jeder der relevanten Meldungen MESSrel(f,k,t) für jeden der Parameter PARA(p) der Parametergruppe. Konsequenterweise kann nach Beendigung des ersten Teilschritts S2_FVCAL_1 für jede mögliche Kombination KOM(w) von Parameterwerten ermittelt werden, wie viele der relevanten Meldungen MESSrel(f,k,t) der jeweiligen Kombination KOM(w) zugeordnet sind.

Nach Abschluss des ersten Teilschrittes S2_FVCAL_1 und der damit erreichten Zuordnung von Parameterwerten zu jeder der relevanten Meldungen MESSrel(f,k,t) wird in einem zweiten Teilschritt S2_FVCAL_2 des zweiten Schritts S2_FVCAL, allgemein formuliert, zur Bestimmung eines Wertevektors Z(KOM(w)) für jede mögliche Kombination KOM(w) von Parameterwerten VAL_PARA(p) der verschiedenen Parameter PARA(p) ermittelt, d.h. gezählt, wie vielen der relevanten Meldungen MESSrel(f,k,t) die jeweilige Kombination KOM(w) von Parameterwerten zugeordnet ist. Dies resultiert für jede mögliche Kombination KOM(w), d.h. für jedes w mit w=1,...,W, wobei W die Anzahl der möglichen Kombinationen angibt, in einem ganzzahligen Wert Z(KOM(w)), so dass Z(KOM(w)) für alle w am Ende den gesuchten Wertevektor darstellt.

Wenn bspw. für den Parameter "Meldungscluster" MC zwei Paramterwerte MC(1), MC(2) und für den Parameter "Zeitintervall" dT drei Parameterwerte dT(1), dT(2), dT(3) verfügbar sind, ergeben sich W=2*3=6 mögliche Kombinationen KOM(w) von Parameterwerten. Sind auch die oben optional aufgeführten Parameter MT bzw. FET mit bspw. vier bzw. fünf möglichen Parameterwerten vorgesehen, ergeben sich insgesamt W=2*3*4*5=120 Kombinationen KOM(w). Für jede dieser Kombinationen KOM(w) wird gezählt, wie viele Meldungen MESSrel zugeordnet sind bzw. wie viele Meldungen MESSrel die jeweilige Kombination KOM(w) aufweisen, um damit den Wertevektor Z(KOM(w)) zu ermitteln.

Wenn bspw. wiederum nur die beiden Parameter MC="Meldungscluster" und dT="Zeitintervall" verarbeitet werden sollen und wenn zudem für den Parameter MC="Meldungscluster" zwei Parameterwerte MC(1), MC(2) und für den Parameter dT="Zeitintervall" drei Parameterwerte dT(1), dT(2), dT(3) zur Verfügung stehen, sind insgesamt W=6 Kombinationen KOM von Parameterwerten möglich: KOM(w)={[MC(1); dT(1)], [MC(1); dT(2)], [MC(1); dT(3)], [MC(2); dT(1)], [MC(2); dT(2)], [MC(2); dT(3)]}. Dabei gilt bspw. KOM(1)=[MC(1); dT(1)] sowie KOM(6)=[MC(2); dT(3)] usw. Im zweiten Teilschritt S2_FVCAL_2 wir nun für jede der sechs möglichen Kombinationen KOM(w) gezählt, wie viele Meldungen MESSrel(f,k,t) jeweils zugeordnet sind. Der zu bestimmende Wertevektor Z(KOM(w)) wird dann unmittelbar aus den jeweils gezählten Werten gebildet, d.h. die Einträge des Wertevektors Z(KOM(w)) sind die Anzahlen der Meldungen MESSrel(f,k,t), die für die jeweilige Kombination KOM(w) von Parameterwerten festgestellt bzw. gezählt werden.

Unter der willkürlichen, rein exemplarischen Annahme, dass
eine Meldung zum ersten Meldungscluster MC(1) gehört und im ersten Zeitintervall dT(1) generiert wurde, dass also einer Meldung die Parameterwertkombination [MC(1); dT(1)] zugeordnet ist, drei Meldungen zum ersten Meldungscluster MC(1) gehören und im zweiten Zeitintervall dT(2) generiert wurden, dass also drei Meldungen die Parameterwertkombination [MC(1); dT(2)] zugeordnet ist, zwei Meldungen zum ersten Meldungscluster MC(1) gehören und im dritten Zeitintervall dT(3) generiert wurden, dass also zwei Meldungen die Parameterwertkombination [MC(1); dT(3)] zugeordnet ist, vier Meldungen zum zweiten Meldungscluster MC(2) gehören und im ersten Zeitintervall dT(1) generiert wurden, dass also vier Meldungen die Parameterwertkombination [MC(2); dT(1)] zugeordnet ist, sechs Meldungen zum zweiten Meldungscluster MC(2) gehören und im zweiten Zeitintervall dT(2) generiert wurden, dass also sechs Meldungen die Parameterwertkombination [MC(2); dT(2)] zugeordnet ist, und fünf Meldungen zum zweiten Meldungscluster MC(2) gehören und im dritten Zeitintervall dT(3) generiert wurden, dass also fünf Meldungen die Parameterwertkombination [MC(2); dT(3)] zugeordnet ist, ergibt sich für den zugehörigen Wertevektor Z(KOM(w))={1; 3; 2; 4; 6; 5}.

In einer spezifischeren Formulierung des Herangehens beim Bestimmen des Wertevektors Z(KOM(w)) wird angenommen, dass zuerst der Parameter "Meldungscluster" MC und anschließend der Parameter "Zeitintervall" dT betrachtet wird. Grundsätzlich kann diese Reihenfolge aber auch vertauscht werden. Wenn zudem weitere Parameter in die Betrachtung einfließen sollen, bspw. der "Meldungstyp" MT und/oder der "Funktionseinheitentyp" FET, ist die Reihenfolge der Betrachtung der Parameter ebenfalls beliebig.

Es wird einer jeden der ausgewählten relevanten Meldungen MESSrel(f,k,t) in Abhängigkeit von ihrem Meldungstext TXT(f,k,t) ein bestimmtes, passendes Meldungscluster MC(m') aus der diskreten Vielzahl MCN von vorgegebenen Meldungsclustern MC(i) mit i=1,...,MCN zugewiesen. Anschließend wird eine Vielzahl MCN von Anzahlen Z(i) mit i=1,...,MCN ermittelt, wobei eine jeweilige Anzahl Z(i') repräsentiert, wie vielen relevanten Meldungen MESSrel(f,k,t) das bestimmte Meldungscluster MC(i') zugeordnet ist, resultierend in einem ersten Wertevektor Z(i).

Zusätzlich wird einer jeden der ausgewählten relevanten Meldungen MESSrel(f,k,t) in Abhängigkeit von ihrem Zeitstempel TS(f,t) ein bestimmtes, passendes Zeitintervall dT(d') aus der diskreten Vielzahl DTN von vorgegebenen Zeitintervallen dT(d) mit d=1,..,DTN zugewiesen. Anschließend wird eine Vielzahl MCN*DTN von Anzahlen Z(i,d) mit i=1,...,MCN und d=1,...,DTN ermittelt, wobei eine jeweilige Anzahl Z(i',d') repräsentiert, wie vielen relevanten Meldungen MESSrel(f,k,t) das bestimmte Meldungscluster MC(i') sowie das bestimmte Zeitintervall dT(d`), d.h. die Kombination KOM der Parameterwerte MC(i') und dT(d`), zugeordnet ist, resultierend in einem zweiten Wertevektor Z(i,d).

Optional kann zusätzlich einer jeden der ausgewählten relevanten Meldungen MESSrel(f,k,t) in Abhängigkeit von ihrem Meldungstypen MT(f,k,t) ein bestimmter, passender Meldungstyp MT(y`) aus der diskreten Vielzahl MTN von vorgegebenen Meldungstypen MT(y) mit y=1,...,MTN zugewiesen werden. Anschließend kann eine Vielzahl MCN*DTN*MTN von Anzahlen Z(i,d,y) ermittelt werden, wobei eine jeweilige bestimmte Anzahl Z(i',d',y') repräsentiert, wie vielen Meldungen MESSrel(f,k,t) das bestimmte Meldungscluster MC(i') sowie das bestimmte Zeitintervall dT(d`) sowie der bestimmte Meldungstyp MT(y'), d.h. die Kombination KOM der Parameterwerte MC(i'), dT(d`) und MT(y'), zugeordnet ist, resultierend in einem dritten Wertevektor Z(i,d,y).

Optional kann zusätzlich einer jeden der ausgewählten relevanten Meldungen MESSrel(f,t) in Abhängigkeit von ihrer Kennung ID(f,k) ein bestimmter, passender Funktionseinheitentyp FET(q) aus der Vielzahl FEN von vorgegebenen Funktionseinheitentypen FET(q) zugewiesen werden. Anschließend kann eine Vielzahl MCN*DTN*MTN*FEN von Anzahlen Z(i,d,y,q) ermittelt werden, wobei eine jeweilige bestimmte Anzahl Z(i',d',y',q') repräsentiert, wie vielen Meldungen MESSrel(f,k,t) das bestimmte Meldungscluster MC(i') sowie das bestimmte Zeitintervall dT(d`) sowie der bestimmte Meldungstyp MT(y`) sowie der bestimmte Funktionseinheitentyp FET(q'), d.h. die Kombination KOM der Parameterwerte MC(i'), dT(d`), MT(y') und FET(q'), zugeordnet ist, resultierend in einem vierten Wertevektor Z(i,d,y,q).

Prinzipiell kann jeder der Wertevektoren, d.h. der erste Z(i), der zweite Z(i,d), der dritte Z(i,d,y) oder der vierte Wertevektor Z(i,d,y,q) für alle i und ggf. alle d und ggf. alle y und ggf. alle q, in den zu bestimmenden Merkmalsvektor FV transformiert werden. Jeder dieser Wertevektoren Z(i), Z(i,d), Z(i,d,y) oder auch Z(i,d,y,q) kann für alle i und ggf. alle d und ggf. alle y und ggf. alle q in anderer Schreibweise als Z(KOM(w)) dargestellt werden, da Einträge im jeweiligen Wertevektor die Anzahl der Meldungen MESSrel(f,k,t) repräsentieren, welche der jeweiligen Parameterwertkombination i bzw. i,d bzw. i,d,y bzw. i,d,y,q zugeordnet sind.

Somit resultiert sowohl in der allgemeinen als auch in der spezifischeren Formulierung, welche letztlich vergleichbare Herangehensweisen beschreiben, zum Abschluss des zweiten Teilschrittes S2_FVCAL_2 der Wertevektor Z(KOM(w)).

Zur Bestimmung des Merkmalsvektors FV aus dem Wertevektor Z(KOM(w)) im dritten Teilschritt S2_FVCAL_3 des zweiten Schritte S2_FVCAL wird eine Funktion "func" verwendet.

Im einfachsten Fall ist die Funktion "func" die Identitätsfunktion "id", so dass gilt FV=func(Z(KOM(w)))=id(Z(KOM(w))=Z(KOM(w)). Hier fungiert also der Wertevektor Z(KOM(w)) selbst als Merkmalsvektor FV.

In einer weiteren Ausführung ist die Funktion "func" durch ein vorab trainiertes künstliches neuronales Netzwerk KNN1 realisiert. In diesem Fall wird der Wertevektor Z(KOM(w)) dem Netzwerk KNN1 zugeführt, welches daraufhin als Ergebnis den gesuchten Merkmalsvektor FV liefert.

In einem dritten Schritt S3_FRSCAL de Verfahrens ERRDAT wird der Merkmalsvektor FV einem vorab trainierten künstlichen neuronalen Netzwerk KNN2 zugeführt, welches daraus bspw. unter Verwendung eines sog. Gradient Boost Modell das gesuchte fehlerrepräsentierende Signal FRS bestimmt und ausgibt. Das fehlerrepräsentierende Signal FRS umfasst insbesondere zumindest eine Fehlerklasse FK(c), bspw. FK(1)="Wiederstandsschweißen", FK(2)="Mechanik", FK(3)="Roboter Greifer", welche den Fehlerfall charakterisiert, welcher im hier beschriebenen Verfahren ERRDET wie oben beschrieben prozessiert wird.

Um die für einen bestimmten Fehlerfall zutreffende Fehlerklasse FK(c') aus einer Vielzahl FKN von vorgegebenen Fehlerklassen FK(c) mit c=1,...,FKN zu bestimmen, ermittelt das entsprechend trainierte Netzwerk KNN2 anhand des zugeführten Merkmalsvektors FV für eine jede Fehlerklasse FK(c) der Vielzahl FKN von vorgegebenen Fehlerklassen FK(c) die Wahrscheinlichkeit P(FK(c)), dass der vom Merkmalsvektor FV repräsentierte Fehlerfall der jeweiligen Fehlerklasse FK(c) entspricht. Das Netzwerk KNN2 stellt das fehlerrepräsentierende Signal FRS in Abhängigkeit von den so ermittelten Wahrscheinlichkeiten P(FK(c)) bereit, so dass es die Fehlerklasse FK(c') des Fehlerfalls repräsentiert.

Hierbei repräsentiert das fehlerrepräsentierende Signal FRS für den Fall, dass die Wahrscheinlichkeit P(FK(c')) für eine bestimmte Fehlerklasse FK(c') größer ist als ein erster Schwellwert SW1, insbesondere SW1 ≥ 90%, diese bestimmte Fehlerklasse FK(c`).

Ansonsten und für den Fall, dass die Summe der N größten vom Netzwerk KNN2 bestimmten Wahrscheinlichkeiten P(FK(c)) größer ist als ein zweiter Schwellwert SW2, insbesondere SW2 ≥ 37%, repräsentiert das fehlerrepräsentierende Signal FRS eben diese N Fehlerklassen. Dabei ist N vorgebbar, bspw. N=3.

Ansonsten wird das fehlerrepräsentierende Signal FRS so gewählt, dass es gar keine konkrete Fehlerklasse repräsentiert.

Wenn es also bspw. FKN=5 Fehlerklassen gibt und das Netzwerk KNN2 Wahrscheinlichkeiten P(FK(1))=10%, P(FK(2))=92%, P(FK(3))=53%, P(FK(4))=38%, P(FK(5))=75% ermittelt, wird das fehlerrepräsentierende Signal FRS die Fehlerklasse FK(2) repräsentieren. Wenn die Wahrscheinlichkeiten bspw. so verteilt sind, dass gilt P(FK(1))=14%, P(FK(2))=5%, P(FK(3))=18%, P(FK(4))=10%, P(FK(5))=3%, wird das fehlerrepräsentierende Signal FRS unter der Voraussetzung, dass N=3 gilt, die Fehlerklassen FK(1), FK(3) und FK(4) repräsentieren.

Das fehlerrepräsentierende Signal FRS kann in der Folge zu diversen Zwecken weiter verarbeitet werden: Zum einen kann es selbst an einer Anzeigeeinrichtung 120 der Anlage 100 angezeigt werden. Zusätzlich oder alternativ kann in Abhängigkeit vom fehlerrepräsentierenden Signal FRS mit Hilfe eines entsprechenden Signalgebers 130 ein akustisches und/oder optisches Signal erzeugt werden. Zusätzlich oder alternativ kann in Abhängigkeit vom fehlerrepräsentierenden Signal FRS zumindest die Komponente k, insbesondere die Funktionseinheit FK(f,k), von der die Meldung MESS(f,k,t) gesendet ist, gesteuert oder geregelt werden und dabei bspw. abgeschaltet oder in einen anderen Betriebsmodus o.ä. versetzt werden.

In konkreteren Ausführungen können in Abhängigkeit vom fehlerrepräsentierenden Signal FRS bspw. bestimmte Meldungstexte, bspw. Alarmmeldungen aus einer vorgegebenen Liste von Alarmtexten angezeigt werden, bspw. an der Anzeigeeinrichtung 120. Ggf. kann auch eine Nachricht, bspw. eine eMail oder sog. "push-Nachricht" mit entsprechendem Textinhalt an ein Service-Personal oder andere geeignete Adressaten gesendet werden. Dabei können die angezeigten oder per Nachricht versendeten Texte auch mit Handlungsanweisungen oder sonstigen zusätzlichen Informationen angereichert sein, jeweils abhängig vom Signal FRS und vom davon repräsentierten Fehlerfall. Es ist des Weiteren möglich, dass ein Prozess mit einem sog. Ticket-System gestartet wird, was bspw. eine Bestellung bestimmter Services, Materialien und/oder Ersatzteile auslöst. Weiterhin kann in Abhängigkeit vom fehlerrepräsentierenden Signal FRS der Signalgeber 130, bspw. ein "Alarm Stack", bspw. eine Ampel, ein der Fehlerklasse entsprechendes Alarmsignal ausgeben.

Zu Dokumentationszwecken können im Fehlerfalls das ermittelte fehlerrepräsentierende Signal FRS, d.h. die Fehlerklasse, sowie bspw. die relevanten Meldungen MESSrel gespeichert werden.

Für das Vorabtraining des Netzwerks KNN2 hinsichtlich dessen Fähigkeit, aus dem Merkmalsvektor FV=func(Z(KOM(w))) das fehlerrepräsentierende Signal FRS abzuleiten, können bspw. historische Daten derselben oder einer vergleichbaren Industrieanlage in Form von tatsächlichen oder ggf. simulierten Fehlerfällen und damit zusammenhängenden, bereits dokumentierten Meldungen MESS genutzt werden.

Die diversen zur Verfügung stehenden Parameterwerte MC(1),...,MC(MCN) für den Parameter "Meldungscluster" MC können vorab bspw. mit Hilfe eines sog. K-Means-Algorithmus definiert werden. Dabei werden alle grundsätzlich möglichen Meldungstexte TXT(f,k,t) mit dem sog. "TF-IDF"-Verfahren ("Term Frequency - Inverse Document Frequency") in eine numerische Matrix umgewandelt, welche ihrerseits als Input für den K-Means Algorithmus dient. Dieser liefert als Ergebnis die verschiedenen Meldungscluster MC(1),...,MC(MCN).

Die diversen zur Verfügung stehenden Parameterwerte dT(1),...,dT(DTN) für den Parameter "Zeitintervall" dT können bspw. manuell vorgegeben werden.

Die diversen zur Verfügung stehenden Parameterwerte MT(1),...,MT(MTN) für den Parameter "Meldungstyp" MT können bspw. manuell vorgegeben werden. Da die Meldungstypen eher generischen Charakter haben können, können sie auch anlagenunspezifisch vorgegeben sein, bspw. vom Hersteller des Kontrollsystems.

Die diversen zur Verfügung stehenden Parameterwerte FET(1),...,FET(FEN) für den Parameter "Funktionseinheitentyp" FET können durch die in der Anlage 100 vorgesehenen Komponenten k und Funktionseinheiten FG gegeben sein. Bspw. kann ein Parameterwert FET(q) für den Parameter "Funktionseinheitentyp" FET(q)="Motor" sein, wobei sämtliche, durchaus möglicherweise verschiedenen Funktionsgruppen, die unter den Typ "Motor" fallen, diesen Parameterwert FET(q)="Motor" tragen.

Die obigen Ausführungen zur Bestimmung des fehlerrepräsentierenden Signals FRS haben offen gelassen, welche Bereiche bzw. Anlagenteile 100-a durch das jeweils bestimmte fehlerrepräsentierende Signals FRS repräsentiert werden. Es ist denkbar, dass das Signal FRS für die ganze Industrieanlage 100 gilt. Anderenfalls ist es denkbar, dass das Signal FRS für den spezifischen Anlagenteil 100-a gilt, welcher die das Signal ERR erzeugende Komponente k umfasst. In dem Fall kann es also sein kann, dass für die Industrieanlage 100 mehrere Signals FRS auftreten, die für verschiedene Anlagenteile 100-a gelten und sich demensprechend voneinander unterscheiden können. Wenn das Signal FRS für einen bestimmten Anlagenteil 100-a` generiert werden soll, so werden beim Verfahren ERRDET nur die Meldungen MESS(f,k,t) berücksichtigt, welche von Komponenten k stammen, die zum Anlagenteil 100-a` gehören.

Die Netzwerke KNN1 und KNN2 müssen nicht zwingend separate Netzwerke sein, sondern können durch ein und dasselbe, vorab trainierte künstliche neuronale Netzwerk KNN realisiert sein.

Um die oben angedeuteten Funktionen des Steuerns/Regelns der Komponenten k, des Überwachens hinsichtlich eines Fehlerfalls, des Empfangens und Verarbeitens von Meldungen MESS(f,k,t) zur Erzeugung des fehlerrepräsentierenden Signals FRS, d.h. Ausführung des Verfahrens ERRDET, sowie ggf. für andere, hier nicht genannte Funktionen auszuführen, ist jeweils ein entsprechendes oder aber ein gemeinsames Softwarepaket vorgesehen, welches im Speicher 110m abgelegt ist und welches vom Prozessor 110p ausgeführt wird, um die genannten Funktionen auszuführen.

Auch wenn die vorliegende Erfindung unter Bezugnahme auf konkrete Ausführungsformen beschrieben wurde, versteht es sich, dass diverse Änderungen und Modifikationen an den beschriebenen Ausführungsformen vorgenommen werden können, ohne den Bereich der erfinderischen Idee zu verlassen. Die vorstehende Beschreibung sollte als veranschaulichend und nicht als einschränkend angesehen werden und so, dass sämtliche Äquivalente und/oder Kombinationen von Ausführungsformen von der Beschreibung umfasst sind. Somit ist die Erfindung nicht auf die oben dargestellten Ausführungsformen beschränkt, vielmehr können von einer Fachperson Variationen abgeleitet werden, ohne vom Umfang der Erfindung abzuweichen.

## Patentansprüche

1. Computerimplementiertes Verfahren zum Erzeugen eines fehlerrepräsentierenden Signals FRS, welches einen Fehlerfall einer Komponente k eines Anlagenteils (100-a) einer Industrieanlage (100) repräsentiert, wobei die Komponente k eine oder mehrere Funktionseinheiten FG(f,k) mit f=1,...,F(k) umfasst, wobei eine jede Funktionseinheit FG(f,k) im Betrieb der Komponente k über eine Zeit t eine Vielzahl von betriebszustandsabhängigen Meldungen MESS(f,k,t) generiert, wobei im Fehlerfall
- in einem ersten Schritt unter Berücksichtigung von Inhalten zumindest einiger MESSrel(f,k,t) der Meldungen MESS(f,k,t) und unter Berücksichtigung der zeitlichen Reihenfolge dieser Meldungen MESSrel(f,k,t) ein Merkmalsvektor FV generiert wird und
- in einem zweiten Schritt der Merkmalsvektor FV einem künstlichen neuronalen Netzwerk KNN2 zugeführt wird, welches daraus das fehlerrepräsentierende Signal FRS bestimmt und ausgibt.

2. Verfahren nach Anspruch 1, **dadurch gekennzeichnet, dass** zur Generierung des Merkmalsvektors FV
- im ersten Schritt aus der Gesamtheit der Meldungen MESS(f,k,t) diejenigen Meldungen MESSrel(f,k,t) ausgewählt werden, die für den Fehlerfall relevant sind,
- im zweiten Schritt die ausgewählten relevanten Meldungen MESSrel(f,k,t) zu dem Merkmalsvektor FV transformiert werden.

3. Verfahren nach einem der Ansprüche 1 bis 2, **dadurch gekennzeichnet, dass** eine Meldung MESS(f,k,t) dann für den Fehlerfall relevant ist,
- wenn sie von derjenigen Komponente k, insbesondere von derjenigen Funktionseinheit FG(f,k) dieser Komponente k, generiert wurde, für die der Fehlerfall vorliegt, und
- wenn sie in einem vorgegebenen Zeitfenster TREL generiert wurde, welches sich über einen Zeitraum zwischen Zeitpunkten T0 und T1 mit T0<TF<T1 erstreckt, wobei TF den Zeitpunkt des Fehlerfalls repräsentiert.

4. Verfahren nach einem der Ansprüche 1 bis 3, **dadurch gekennzeichnet, dass** eine jeweilige Meldung MESS(f,k,t) umfasst:
- einen betriebszustandsabhängigen Meldungstext TXT(f,k,t), welcher einen Betriebszustand der Funktionseinheit FG(f,k) zur Zeit t beschreibt,
- einen Zeitstempel TS(f,k,t), welcher den Zeitpunkt repräsentiert, zu dem die jeweilige Meldung MESS(f,k,t) generiert wurde,
- eine Kennung ID(f,k), anhand derer die Funktionseinheit FG(f,k) eindeutig identifizierbar ist, sowie vorzugsweise
- einen übergeordneten Meldungstypen MT(f,k,t), welcher eine von mehreren vorgegebenen Kategorien repräsentiert, der die Meldung MESS(f,k,t) zugeordnet ist.

5. Verfahren nach einem der Ansprüche 1 bis 4, **dadurch gekennzeichnet, dass** die relevanten Meldungen MESSrel(f,k,t) zu dem Merkmalsvektor FV transformiert werden, indem
- einer jeden ausgewählten relevanten Meldung MESSrel(f,k,t) für einen jeden Parameter PARA(p) einer vorgegebenen Gruppe GRP_PARA von diskreten Parametern PARA(p) ein Parameterwert VAL_PARA(p) zugewiesen wird,
- für jede Kombination KOM von Parameterwerten verschiedener Parameter eine Anzahl Z(KOM) ermittelt wird, die repräsentiert, wie vielen der ausgewählten relevanten Meldungen MESSrel(f,k,t) die jeweilige Kombination KOM von Parameterwerten zugewiesen ist, wobei die Gesamtheit der Anzahlen Z(KOM) für alle Kombinationen KOM einen Wertevektor Z(KOM) bildet,
- aus dem Wertevektor Z(KOM) der Merkmalsvektor FV ermittelt wird.

6. Verfahren nach Anspruch 5, **dadurch gekennzeichnet, dass**
- einer der Parameter PARA(p1)=MC der vorgegebenen Gruppe GRP_PARA verschiedene Meldungscluster MC repräsentiert, wobei für den Parameter PARA(p1)=MC eine Anzahl MCN von Parameterwerten VAL_PARA(p1)=MC(1),...,MC(MCN) vorgegeben ist und einer jeden relevanten Meldung MESSrel(f,k,t) basierend auf ihrem Meldungstext TXT(f,k,t) zumindest einer der verfügbaren Parameterwerte MC(1),...,MC(MCN) zugeordnet wird, und/oder
- ein anderer der Parameter PARA(p2)=dT der Gruppe GRP_PARA verschiedene Zeitintervalle dT repräsentiert, wobei für den Parameter PARA(p2)=dT eine Anzahl DTN von Parameterwerten VAL_PARA(p2)=dT(1),...,dT(DTN) vorgegeben ist und einer jeden relevanten Meldung MESSrel(f,k,t) basierend auf ihrem Zeitstempel TS(f,k,t) einer der verfügbaren Parameterwerte dT(1),...,dT(DTN) zugeordnet wird,
und/oder
- ein anderer der Parameter PARA(p3)=MT der vorgegebenen Gruppe GRP_PARA verschiedene Meldungstypen MT repräsentiert, wobei für den Parameter PARA(p3)=MT eine Anzahl MTN von Parameterwerten VAL_PARA(p3)=MT(1),...,MT(MTN) vorgegeben ist und einer jeden relevanten Meldung MESSrel(f,k,t) basierend auf ihrem Meldungstypen MT(f,k,t) oder basierend auf ihrem Meldungstext TXT(f,k,t) zumindest einer der verfügbaren Meldungstypen MT(1),...,MT(MTN) zugeordnet wird,
und/oder
- ein anderer der Parameter PARA(p4)=FET der vorgegebenen Gruppe GRP_PARA verschiedene Funktionseinheitentypen FET repräsentiert, wobei für den Parameter PARA(p4)=FET eine Anzahl FEN von Parameterwerten VAL_PARA(p4)=FET(1),...,FET(FEN) vorgegeben ist und einer jeden relevanten Meldung MESSrel(f,k,t) basierend auf ihrer Kennung ID(f,k) zumindest einer der verfügbaren Funktionseinheitentypen FET(1),...,FET(FEN) zugeordnet wird.

7. Verfahren nach einem der Ansprüche 1 bis 6, **dadurch gekennzeichnet, dass** die ausgewählten relevanten Meldungen MESSrel(f,k,t) zu dem Merkmalsvektor FV transformiert werden, indem
- einer jeden der ausgewählten relevanten Meldungen MESSrel(f,k,t) in Abhängigkeit von ihrem Meldungstext TXT(f,k,t) ein bestimmtes Meldungscluster MC(i') aus einer diskreten Vielzahl MCN von vorgegebenen Meldungsclustern MC(i) mit i=1,...,MCN zugewiesen wird und
- zur Bildung des Wertevektors Z eine Vielzahl MCN von Anzahlen Z(i) mit i=1,...,MCN ermittelt wird, wobei eine jeweilige Anzahl Z(i') repräsentiert, wie vielen relevanten Meldungen MESSrel(f,k,t) das bestimmte Meldungscluster MC(i') zugeordnet ist, und
- aus dem Wertevektor Z der Merkmalsvektor FV bestimmt wird.

8. Verfahren nach einem der Ansprüche 6 bis 7, **dadurch gekennzeichnet, dass** mögliche Parameterwerte MC(i) des verschiedene Meldungscluster MC repräsentierenden Parameters MC mit Hilfe eines K-Means Algorithmus identifiziert werden, indem zunächst sämtliche mögliche Meldungen MESS(f,k,t) der Anlage (100) insbesondere mit einem TF-IDF Verfahren in eine numerische Matrix umgewandelt werden und die Matrix anschließend als Input für den K-Means Algorithmus verwendet wird, um die Parameterwerte MC(i) zu erzeugen.

9. Verfahren nach Anspruch 7 oder 8, **dadurch gekennzeichnet, dass** zusätzlich
- einer jeden der ausgewählten relevanten Meldungen MESSrel(f,k,t) in Abhängigkeit von ihrem Zeitstempel TS(f,k,t) ein bestimmtes Zeitintervall dT(d`) aus einer diskreten Vielzahl DTN von vorgegebenen Zeitintervallen dT(d) mit d=1,..,dTD zugewiesen wird und
- zur Bildung des Wertevektors Z eine Vielzahl MCN*DTN von Anzahlen Z(i,d) mit i=1,...,MCN und d=1,...,DTN ermittelt wird, wobei eine jeweilige Anzahl Z(i`,d`) repräsentiert, wie vielen relevanten Meldungen MESSrel(f,k,t) das bestimmte Meldungscluster MC(i') sowie das bestimmte Zeitintervall dT(d`) zugeordnet ist,
- aus dem Wertevektor Z der Merkmalsvektor FV bestimmt wird.

10. Verfahren nach Anspruch 9, **dadurch gekennzeichnet, dass** zusätzlich
- einer jeden der ausgewählten relevanten Meldungen MESSrel(f,k,t) in Abhängigkeit von ihrem Meldungstypen MT(f,k,t) ein bestimmter Meldungstyp MT(y`) aus einer diskreten Vielzahl MTN von vorgegebenen Meldungstypen MT(y) mit y=1,...,MTN zugewiesen wird und
- zur Bildung des Wertevektors Z eine Vielzahl MCN*DTN*MTN von Anzahlen Z(i,d,y) mit i=1,...,MCN, d=1,...,DTN und y=1,...,MTN ermittelt wird, wobei eine jeweilige bestimmte Anzahl Z(i',d',y') repräsentiert, wie vielen Meldungen MESSrel(f,t) das bestimmte Meldungscluster MC(i') sowie das bestimmte Zeitintervall dT(d`) sowie der bestimmte Meldungstyp MT(y`) zugeordnet ist,
- aus dem Wertevektor Z der Merkmalsvektor FV bestimmt wird.

11. Verfahren nach einem der Ansprüche 7 bis 10, **dadurch gekennzeichnet, dass** zusätzlich
- einer jeden der ausgewählten relevanten Meldungen MESSrel(f,k,t) in Abhängigkeit von der dort enthaltenen Kennung ID(f,k) ein bestimmter Funktionseinheitentyp FET(q') aus einer diskreten Vielzahl FEN von vorgegebenen Funktionseinheitentypen FET(q) mit q=1,...,FEN zugewiesen wird und
- zur Bildung des Wertevektors Z eine Vielzahl MCN*DTN*MTN*FEN von Anzahlen Z(i,d,y,q) ermittelt werden, wobei eine jeweilige bestimmte Anzahl Z(i',d',y',q') repräsentiert, wie vielen Meldungen MESSrel(f,k,t) das bestimmte Meldungscluster MC(i') sowie das bestimmte Zeitintervall dT(d`) sowie der bestimmte Meldungstyp MT(y`) sowie der bestimmte Funktionseinheitentyp FET(q') zugeordnet ist,
- aus dem Wertevektor Z der Merkmalsvektor FV bestimmt wird.

12. Verfahren nach einem der Ansprüche 1 bis 11, **dadurch gekennzeichnet, dass** der so gebildete Merkmalsvektor FV dem künstlichen neuronalen Netzwerk KNN2 zugeführt wird, welches daraufhin, insbesondere unter Verwendung eines Gradient Boosting Modells,
- für eine jede Fehlerklasse FK(c) aus einer Vielzahl FKN von vorgegebenen Fehlerklassen FK(c) mit c=1,...,ERR die Wahrscheinlichkeit P(FK(c)) ermittelt, dass der vom Merkmalsvektor FV repräsentierte Fehlerfall der jeweiligen Fehlerklasse FK(c) entspricht, und
- in Abhängigkeit von den Wahrscheinlichkeiten P(FK(c)) das fehlerrepräsentierende Signal FRS bereitstellt, welches die Fehlerklasse FK(c') des Fehlerfalls repräsentiert.

13. Verfahren nach Anspruch 12, **dadurch gekennzeichnet, dass**
- das fehlerrepräsentierende Signal FRS für den Fall, dass die Wahrscheinlichkeit P(FK(c')) für eine bestimmte Fehlerklasse FK(c') größer ist als ein erster Schwellwert SW1, insbesondere SW1 ≥ 90%, diese bestimmte Fehlerklasse FK(c') repräsentiert,
- das fehlerrepräsentierende Signal FRS ansonsten für den Fall, dass die Summe der N größten Wahrscheinlichkeiten P(FK(c)) größer als ein zweiter Schwellwert SW2 ist, insbesondere SW2 ≥ 37%, diese N Fehlerklassen repräsentiert, wobei N vorgebbar ist, vorzugsweise N=3,
- das fehlerrepräsentierende Signal FRS ansonsten keine Fehlerklasse repräsentiert.

14. Verfahren nach einem der Ansprüche 1 bis 13, **dadurch gekennzeichnet, dass**
- das fehlerrepräsentierende Signal FRS an einer Anzeigeeinrichtung (120) angezeigt wird und/oder
- in Abhängigkeit vom fehlerrepräsentierenden Signal FRS ein Signalgeber (130) ein akustisches und/oder optisches Warnsignal erzeugt und/oder
- in Abhängigkeit vom fehlerrepräsentierenden Signal FRS zumindest die Komponente k, insbesondere die Funktionseinheit FK(f,k), für die der Fehlerfall festgestellt wurde, gesteuert oder geregelt wird.

15. Anlagenteil (100-a) einer Industrieanlage (100) mit einer Vielzahl von Komponenten k, welche jeweils zumindest eine Funktionseinheit FK(f,k) aufweisen, und mit einer Kontrolleinheit, wobei die Kontrolleinheit (110) eingerichtet ist, ein Verfahren nach einem der Ansprüche 1 bis 14 auszuführen.
